# FASCICULE DE BREVET EUROPEEN

(11) **EP 2 110 742 B1**
(45) Date de publication et mention de la délivrance du brevet: **15.11.2017**
(21) Numéro de dépôt: 09290265.9
(22) Date de dépôt: 10.04.2009
(51) Int. Cl.: G06F 9/445

(54) **Dispositif portable et procédé de démarrage externe d'une installation informatique**
Tragbare Vorrichtung und Verfahren zum externen Starten einer IT-Anlage
Portable device and method for externally starting up a computer system

(30) Priorité: 14.04.2008 FR 0802037
(43) Date de publication de la demande: 21.10.2009
(73) Titulaire: Bull S.A.S., 78340 Les Clayes-sous-Bois (FR)
(72) Inventeur: Madjlessi, Afchine, 92350 Le Plessis-Robinson (FR)
(74) Mandataire: Bonnet, Michel

(56) Documents cités:
- WO-A-01/46819
- US-A1- 2007 101 118
- US-A1- 2007 209 035

## Description

La présente invention concerne un dispositif portable de démarrage externe d'une installation informatique. Elle concerne également un procédé correspondant.

Une installation informatique comprend généralement au moins un disque dur interne et une carte mère munie d'un microprocesseur et d'une mémoire vive de type RAM (de l'anglais « Random Access Memory »), pour l'exécution de programmes d'ordinateurs stockés notamment dans le disque dur interne. En premier lieu, le microprocesseur est adapté pour exécuter un programme de démarrage de l'installation informatique, incluant notamment des instructions d'exécution d'un système d'exploitation. Le disque dur interne de l'installation stocke un tel programme de démarrage associé à un système d'exploitation prédéterminé. Un programme de démarrage et un système d'exploitation prédéterminé peuvent aussi être disponibles sur un support de données externe, tel qu'un CD-ROM fourni avec l'installation informatique lorsque celle-ci est munie d'un lecteur correspondant, ou un autre type de support pouvant être connecté à l'installation informatique via un port USB par exemple.

Une stratégie de démarrage appliquée par le microprocesseur peut en outre être définie dans un système élémentaire d'entrée/sortie, appelé communément BIOS (de l'anglais « Basic Input Output System ») et contenu dans une mémoire morte de type ROM (de l'anglais « Read Only Memory ») de la carte mère. Le BIOS peut ainsi prévoir une hiérarchie au démarrage, donnant priorité au programme de démarrage du CD-ROM, si celui-ci est correctement positionné dans le lecteur de l'installation informatique et si son programme de démarrage est prêt à être exécuté, puis au programme de démarrage d'un autre support, si celui-ci est connecté à un port USB de l'installation informatique et si son programme de démarrage est prêt à être exécuté, puis par défaut au programme de démarrage du disque dur interne.

Par ailleurs, même si la stratégie de démarrage appliquée par le microprocesseur privilégie l'exécution du programme de démarrage du disque dur interne de l'installation informatique, celui-ci peut être configuré pour activer un système d'exploitation stocké dans un dispositif externe, par exemple un dispositif portable connecté au port USB de l'installation informatique.

L'invention concerne plus précisément un dispositif portable de démarrage externe d'une installation informatique comportant :
- une interface de connexion à l'installation informatique, et
- un support de données comportant des données et codes exécutables d'un système d'exploitation hôte activable par un programme de démarrage de l'installation informatique et configuré pour une détection automatique d'éléments matériels et/ou logiciels de l'installation informatique et pour une activation de pilotes informatiques correspondants.

L'avantage d'un tel dispositif portable de démarrage externe est de permettre à un utilisateur de démarrer l'installation informatique sur la base d'un système d'exploitation et éventuellement d'un environnement qui lui sont propres, de sorte qu'il n'est pas dépendant du système d'exploitation et de l'environnement qui sont pré installés sur l'installation informatique tout en étant capable d'adapter son système d'exploitation et son environnement aux éléments matériels et/ou logiciels de l'installation informatique. En revanche, puisque l'utilisateur ne connaît pas a priori les éléments matériels et/ou logiciels de l'installation informatique, il est nécessaire que le système d'exploitation hôte stocké par le dispositif portable de démarrage externe soit configuré pour une détection automatique des éléments matériels et/ou logiciels de l'installation informatique et pour une activation des pilotes informatiques correspondants.

Cette contrainte limite le choix possible de systèmes d'exploitation hôtes pouvant être stockés par le dispositif portable de démarrage externe : en effet, si tous les systèmes d'exploitation sont aptes à utiliser des éléments matériels et/ou logiciels pilotables à l'aide de pilotes informatiques génériques prédéterminés et limités, ils ne sont pas tous conçus ou configurés pour une détection automatique des éléments matériels et/ou logiciels de l'installation informatique sur laquelle ils s'exécutent et pour une activation des pilotes informatiques spécifiques correspondants.

Si, au contraire, l'utilisateur veut pouvoir choisir librement le système d'exploitation hôte devant être stocké dans le dispositif portable de démarrage externe, pour lui permettre de travailler avec le système d'exploitation et éventuellement l'environnement de son choix, il n'est alors pas possible d'assurer, dans tous les cas de démarrage externe, une détection automatique des éléments matériels et/ou logiciels de l'installation informatique et une activation des pilotes informatiques correspondants.

Cette contrainte complique alors le démarrage de l'installation informatique à partir du dispositif portable de démarrage externe.

Par ailleurs, certains systèmes d'exploitation ne peuvent même pas être exécutés au démarrage par le programme de démarrage d'une installation informatique s'ils sont stockés sur un dispositif portable externe à l'installation.

Il peut ainsi être souhaité de prévoir un dispositif portable et/ou un procédé de démarrage d'une installation informatique qui permette de s'affranchir d'au moins une partie de ces contraintes.

L'invention a donc pour objet un dispositif portable de démarrage externe d'une installation informatique comportant :
- une interface de connexion à l'installation informatique,
- un support de données comportant des données et codes exécutables d'un système d'exploitation hôte activable par un programme de démarrage de l'installation informatique et configuré pour une détection automatique d'éléments matériels et/ou logiciels de l'installation informatique et pour une activation de pilotes informatiques correspondants,
caractérisé en ce que le support de données comporte en outre :
- des données et codes exécutables d'une interface logicielle de pilotage configurée pour présenter les pilotes informatiques activés par le système d'exploitation hôte sous la forme d'au moins un pilote informatique générique prédéterminé, et
- des données et codes exécutables d'un système d'exploitation invité activable par l'interface logicielle de pilotage et configuré pour une gestion des éléments matériels et/ou logiciels de l'installation informatique à l'aide du pilote informatique générique prédéterminé.

Ainsi, grâce à un dispositif portable de démarrage externe selon invention, une adaptation automatique à l'installation informatique, quels que soient ses éléments matériels et/ou logiciels, est rendue possible par le système d'exploitation hôte, et un très large choix de systèmes d'exploitation et éventuellement d'environnements propres à l'utilisateur est rendu possible par la présence de l'interface logicielle de pilotage qui permet l'ajout dans le dispositif portable de démarrage externe d'un système d'exploitation invité choisi librement par l'utilisateur.

On notera qu'il est même possible de choisir un système d'exploitation invité ne pouvant pas être exécuté au démarrage à partir d'un dispositif portable externe, puisque c'est le système d'exploitation hôte qui est exécuté au démarrage par le programme de démarrage de l'installation informatique et non pas directement le système d'exploitation invité.

De façon optionnelle, le support de données du dispositif portable de démarrage externe comporte des données et codes exécutables du programme de démarrage de l'installation informatique.

De façon optionnelle, l'interface de connexion est un port USB.

De façon optionnelle, un dispositif portable selon l'invention comporte des moyens de sécurisation d'une utilisation des données et codes exécutables et des moyens de transmission des données et codes exécutables, depuis le support de données vers l'installation informatique via l'interface de connexion, après exécution des moyens de sécurisation, pour le démarrage de l'installation informatique à l'aide des données et codes exécutables transmis.

De façon optionnelle, les moyens de sécurisation comportent des moyens de vérification et de validation de droits d'accès, pour l'exécution d'un procédé d'authentification d'un utilisateur du dispositif.

De façon optionnelle, les moyens de sécurisation comportent des moyens cryptographiques de sécurisation des données et codes exécutables stockés dans le support de données.

De façon optionnelle, les moyens cryptographiques de sécurisation comportent des moyens d'exécution d'un procédé de vérification de l'intégrité des données et codes exécutables stockés dans le support de données.

De façon optionnelle, les moyens cryptographiques de sécurisation comportent des moyens d'exécution d'un procédé de déchiffrement des données et codes exécutables stockés dans le support de données.

L'invention a également pour objet un procédé de démarrage d'une installation informatique à l'aide d'un dispositif portable de démarrage externe, comportant les étapes suivantes :
- connexion du dispositif portable de démarrage externe à l'installation informatique,
- exécution d'un programme de démarrage de l'installation informatique,
- activation d'un premier système d'exploitation par le programme de démarrage de l'installation informatique pour une détection automatique d'éléments matériels et/ou logiciels de l'installation informatique et pour une activation de pilotes informatiques correspondants,
**caractérisé en ce qu**'il comporte en outre les étapes suivantes :
- activation d'une interface logicielle de pilotage configurée pour présenter les pilotes informatiques activés par le premier système d'exploitation sous la forme d'au moins un pilote informatique générique prédéterminé, et
- activation, par l'interface logicielle de pilotage, d'un second système d'exploitation stocké sous forme de données et codes exécutables par le dispositif portable de démarrage externe pour une gestion des éléments matériels et/ou logiciels de l'installation informatique à l'aide du pilote informatique générique prédéterminé.

De façon optionnelle, un procédé de démarrage selon invention comporte une étape de sécurisation d'une utilisation des données et codes exécutables stockés dans le support de données du dispositif portable de démarrage externe et, après exécution de l'étape de sécurisation, une étape de transmission, par le dispositif portable de démarrage externe, des données et codes exécutables stockés dans support de données vers l'installation informatique, pour l'activation du second système d'exploitation.

L'invention sera mieux comprise à l'aide de la description qui va suivre, donnée uniquement à titre d'exemple et faite en se référant aux dessins annexés dans lesquels :
- les figures 1, 2 et 3 représentent respectivement les structures générales de premier, deuxième et troisième modes de réalisation d'un système informatique incluant un dispositif portable selon l'invention, pour le démarrage sécurisé d'une installation informatique, et
- la figure 4 illustre les étapes successives d'un mode de réalisation d'un procédé de démarrage d'une installation informatique selon l'invention.

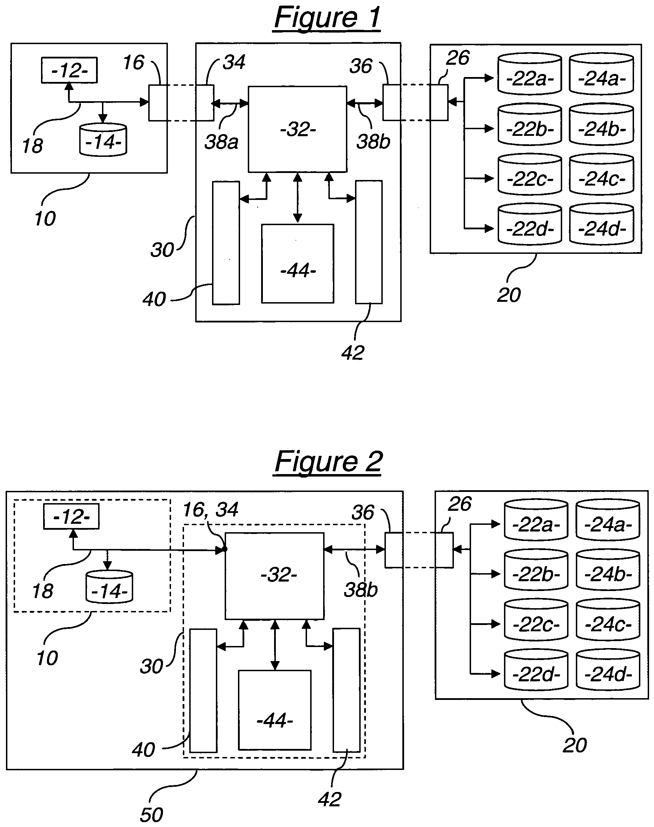

Sur la figure 1, une installation informatique est représentée par la référence générale 10. Cette installation comporte notamment une carte mère 12, un disque dur interne 14 et une interface 16 de connexion à un dispositif externe. Ces trois éléments 12, 14 et 16 sont reliés entre eux à l'aide d'un bus 18 de transmission de données classique. De façon classique également, la carte mère 12 comporte un microprocesseur, une mémoire ROM pour le stockage du BIOS de l'installation informatique 10 et une mémoire RAM pour, en combinaison avec le microprocesseur, l'exécution de programmes, parmi lesquels notamment un programme de démarrage de l'installation informatique 10. Un tel programme de démarrage est par exemple par défaut stocké dans le disque dur interne 14 de l'installation informatique.

Parmi les éléments matériels et/ou logiciels précités et composant l'installation informatique 10 certains doivent être reconnus par un système d'exploitation activé par le programme de démarrage de l'installation informatique 10 et sont accessibles grâce à des pilotes informatiques qui leurs sont spécifiquement associés : il s'agit par exemple de la carte mère 12, des mémoires ROM et RAM, du disque dur interne 14, de l'interface de connexion 16. Mais l'installation informatique 10 peut comporter d'autres éléments accessibles via des pilotes associés comme par exemple une carte graphique, une carte réseau et des périphériques tels qu'un lecteur de CD-ROM, une souris, un clavier, un écran, des haut-parleurs, etc.

Cette installation est appropriée pour la mise en oeuvre de l'invention, mais d'autres configurations possibles d'installations informatiques conviennent aussi. En effet, l'invention s'applique, de façon non limitative, à des installations informatiques telles que des ordinateurs de type PC fixes ou portables, des serveurs, des installations multiprocesseurs, des réseaux locaux d'ordinateurs, etc.

Un dispositif portable de démarrage externe 20, distinct de l'installation informatique 10, est également représenté sur la figure 1.

Il comporte des données 22a et codes exécutables 24a d'un premier système d'exploitation, dit système d'exploitation « hôte » choisi pour son aptitude à détecter automatiquement les éléments matériels et/ou logiciels de l'installation informatique 10 tels que ceux précités et à activer les pilotes informatiques correspondants. Ce système d'exploitation hôte doit également être amorçable sur support externe par un programme de démarrage. A titre d'exemple non limitatif, la distribution Mandriva Free Spring 2007.1 de Linux (marques déposées) répond à ces exigences.

Il comporte en outre des données 22b et codes exécutables 24b d'une interface logicielle de pilotage configurée pour présenter les pilotes informatiques activés par le système d'exploitation hôte sous la forme d'au moins un pilote informatique générique prédéterminé capable d'être reconnu par tout type de système d'exploitation. Cette interface logicielle de pilotage est également capable d'activer un système d'exploitation. A titre d'exemple non limitatif, le logiciel VirtualBox (marque déposée) répond à ces exigences.

Il comporte en outre des données 22c et codes exécutables 24c d'un second système d'exploitation, dit système d'exploitation « invité » activable par l'interface logicielle de pilotage et configuré pour une gestion des éléments matériels et/ou logiciels de l'installation informatique 10 à l'aide du pilote informatique générique prédéterminé. Comme indiqué au paragraphe précédent, tout type de système d'exploitation convient a priori sous réserve qu'il soit supporté par l'interface logicielle de pilotage.

Enfin, de façon optionnelle, il comporte des données 22d et codes exécutables 24d d'un programme de démarrage de l'installation informatique apte à activer le système d'exploitation hôte.

Par souci de clarté, les données et codes exécutables 22a, 22b, 22c, 22d, 24a, 24b, 24c, 24d ont été représentés sur la figure 1 comme étant fonctionnellement stockés sur des supports différents. En fait, ils peuvent être stockés physiquement sur un même disque dur externe ou autre support de données numériques, en une ou plusieurs partitions.

Par ailleurs, chacun de ces données 22a, 22b, 22c, 22d et codes exécutables 24a, 24b, 24c, 24d peut être stocké sous forme chiffrée et associé à une signature, conformément à des procédés de cryptographie classiques.

Le dispositif portable de démarrage externe 20 comporte en outre une interface 26 de connexion directe ou indirecte à l'installation informatique 10 : dans l'exemple de la figure 1, la connexion est indirecte puisque un dispositif 30 de sécurisation du démarrage de l'installation informatique 10 s'interpose. En pratique, le dispositif portable de démarrage externe 20 est par exemple une clé de type USB ou bien un disque dur externe à connexion USB, auquel cas l'interface de connexion 26 est un port ou une prise USB.

Enfin, le dispositif 30 de sécurisation du démarrage de l'installation informatique 10 précité est également représenté sur la figure 1. Ce dispositif de sécurisation 30, optionnel, est par exemple réalisé sous la forme d'un système sur puce électronique, incluant des fonctionnalités de sécurisation d'une utilisation des données et codes exécutables 22a, 22b, 22c, 22d, 24a, 24b, 24c, 24d stockés par le dispositif portable de démarrage externe 20, ainsi que des fonctionnalités de transmission de données. Les fonctionnalités de sécurisation d'une utilisation des données et codes exécutables peuvent inclure des fonctionnalités de vérification et de validation de droits d'accès d'un utilisateur ainsi que des fonctionnalités cryptographiques de sécurisation des données et codes eux-mêmes.

Pour cela, il comporte un microprocesseur 32, deux interfaces 34 et 36 reliées au microprocesseur 32 par deux bus 38a et 38b de transmission de données, des moyens 40 de stockage d'applications exécutables d'émission et de réception de données, des moyens 42 de stockage d'applications exécutables de cryptographie et/ou d'authentification pour la sécurisation des données et codes exécutables et pour la vérification et la validation des droits d'accès, et des moyens 44 de stockage sécurisé de données secrètes de cryptographie et/ou d'authentification. Le microprocesseur 32, doté de son propre système d'exploitation sécurisé, est configuré pour, en association avec les moyens 40, 42 et 44 :
- exécuter une étape de sécurisation d'une utilisation des données et codes exécutables du dispositif portable de démarrage externe 20 comportant au moins l'une des sous étapes suivantes :
   - vérifier et valider des droits d'accès par authentification d'un utilisateur, à l'aide des moyens 42 et 44,
   - déchiffrer des données et codes exécutables, si nécessaire, à l'aide des moyens 42 et 44,
   - vérifier des signatures, si nécessaire, à l'aide des moyens 42 et 44,
- piloter des échanges de données entre une première interface 34 de connexion à l'installation informatique 10 et une seconde interface 36 de connexion au dispositif portable de démarrage externe 20, à l'aide des moyens 40, de manière à transmettre les données et codes exécutables 22a, 22b, 22c, 22d, 24a, 24b, 24c, 24d depuis le dispositif portable de démarrage externe 20 via la seconde interface de connexion 36 vers l'installation informatique 10 via la première interface 34 de connexion, après exécution de l'étape de sécurisation, par vérification et validation de droits d'accès, d'une part, et sécurisation cryptographique des données et codes exécutables 22a, 22b, 22c, 22d, 24a, 24b, 24c, 24d, d'autre part, pour le démarrage de l'installation informatique 10 à l'aide des données et codes exécutables transmis, et
- suspendre le démarrage de l'installation informatique 10 tant que l'étape de sécurisation n'a pas été exécutée.

On notera que le microprocesseur 32, associé aux moyens 40, 42 et 44, permet au dispositif de sécurisation 30 de fonctionner de manière autonome pour réaliser ses fonctionnalités de sécurisation et de transmission de données et codes exécutables. Il est notamment complètement indépendant des ressources de l'installation informatique 10.

Dans le mode de réalisation de la figure 1, l'installation informatique 10, le dispositif de sécurisation 30 et le dispositif portable de démarrage externe 20 forment trois composants distincts pouvant être connectés ou déconnectés simplement, via les interfaces 16, 34, 36 et 26. Comme indiqué précédemment, les interfaces 36 et 26 sont par exemple des ports et/ou prises de type USB compatibles. Il peut en être de même pour les interfaces 16 et 34. Après connexion de ces trois dispositifs 10, 20 et 30, le dispositif de sécurisation 30 s'interpose entre l'installation informatique 10 et le dispositif portable de démarrage externe 20, et les relie en coupure fonctionnelle ou matérielle, pour réaliser le démarrage sécurisé de l'installation informatique 10. Dans ce mode de réalisation, le dispositif de sécurisation 30 peut prendre la forme d'un bloc VHDL d'un composant de type ASIC (de l'anglais « Application Specific Integrated Circuit ») ou d'un réseau de portes logiques programmable de type FPGA (de l'anglais « Field Programmable Gate Array ») indépendant.

Dans un autre mode de réalisation représenté sur la figure 2, le dispositif de sécurisation 30 est intégré, avec l'installation informatique 10, dans un système informatique sécurisé 50. Dans ce mode de réalisation, le dispositif de sécurisation 30 peut prendre la forme d'un bloc VHDL d'un composant de type ASIC ou d'un réseau de portes logiques programmable de type FPGA, disposé en coupure fonctionnelle ou matérielle entre la seconde interface 36 de connexion au dispositif portable de démarrage externe 20 et le bus 18 de transmission de données de l'installation informatique 10. La première interface 34 de connexion du dispositif de sécurisation 30 à l'installation informatique prend alors la forme d'un point d'accès au bus 18 du microprocesseur 32 du dispositif de sécurisation 30.

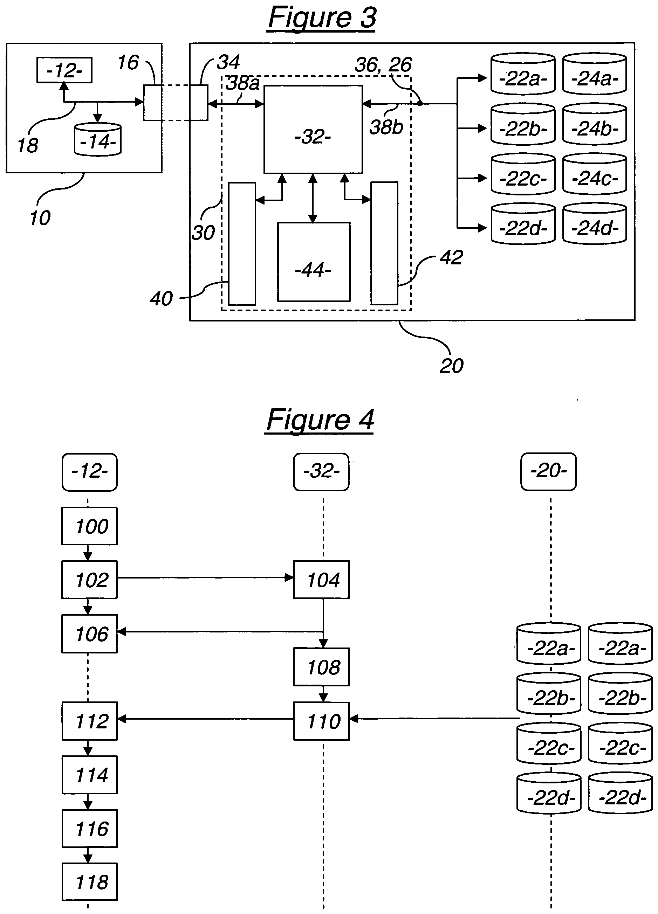

Enfin, dans un autre mode de réalisation représenté sur la figure 3, le dispositif de sécurisation 30 est intégré dans le dispositif portable de démarrage externe 20. Dans ce mode de réalisation, le support de stockage des données et codes exécutables 22a, 22b, 22c, 22d, 24a, 24b, 24c, 24d peut être directement connecté au bus 38b de transmission de données du dispositif de sécurisation 30, ce dernier pouvant prendre la forme d'un bloc VHDL d'un composant de type ASIC ou d'un réseau de portes logiques programmable de type FPGA, disposé en coupure fonctionnelle ou matérielle entre le support de stockage des données et codes exécutables 22a, 22b, 22c, 22d, 24a, 24b, 24c, 24d et la première interface 34 de connexion du dispositif de sécurisation 30 à l'installation informatique. Dans ce cas, les interfaces 16 et 34 peuvent prendre la forme de port et/ou prise USB en correspondance. L'interface 34 remplit alors la fonction d'interface de connexion du dispositif portable de démarrage externe 20 à l'installation informatique 10. Quant à l'interface 36, elle prend la forme d'un point d'accès au bus 38b.

Les fonctionnalités de sécurisation du dispositif de sécurisation 30 comportent l'une ou plusieurs des fonctions classiques de la cryptologie, notamment, la confidentialité, l'intégrité et l'authentification.

La confidentialité concerne l'échange entre entités de messages chiffrés qui, sans clé de déchiffrement, sont inintelligibles. Cette confidentialité est assurée par l'application d'algorithmes à schéma de chiffrement symétrique (i.e. à clé secrète) ou asymétrique (i.e. à paire de clés publique et privée). Pour assurer cette fonctionnalité, le dispositif de sécurisation 30 doit stocker la ou les clé(s) nécessaire(s) au chiffrement ou au déchiffrement dans les moyens de stockage sécurisé 44 et le ou les algorithme(s) de chiffrement correspondants dans les moyens 42 de stockage d'applications. Cette fonctionnalité s'applique aux données et codes exécutables 22a, 22b, 22c, 22d, 24a, 24b, 24c, 24d, éventuellement à l'aide d'algorithmes et clés différents.

L'intégrité concerne la vérification qu'un message reçu n'a pas été modifié par une tierce personne ou un système malveillant. Cette intégrité est gérée à l'aide de fonctions de hachage à clé secrète, dites fonctions HMAC (de l'anglais « keyed-Hash Message Authentication Code »), ou à l'aide de schémas de signature à clé publique. De même, pour assurer cette fonctionnalité, le dispositif de sécurisation 30 doit stocker la ou les clé(s) nécessaire(s) à la vérification d'une signature dans les moyens de stockage sécurisé 44 et le ou les algorithme(s) de génération et/ou vérification de signatures correspondants dans les moyens 42 de stockage d'applications. Cette fonctionnalité s'applique aux données et codes exécutables 22a, 22b, 22c, 22d, 24a, 24b, 24c, 24d, éventuellement à l'aide d'algorithmes et clés différents.

L'authentification concerne la reconnaissance d'une personne à l'aide d'un secret qu'elle seule possède. Le secret peut être un code ou mot de passe, mais peut aussi comporter des données biométriques. Plusieurs protocoles d'authentification existent : certains consistent simplement à comparer un secret saisi à un modèle stocké de façon sécurisée, d'autres combinent authentification et confidentialité ou intégrité, d'autres encore sont à divulgation nulle de connaissance. Pour assurer cette fonctionnalité, le dispositif de sécurisation 30 doit éventuellement stocker un modèle dans les moyens de stockage sécurisé 44 et le protocole d'authentification utilisé dans les moyens 42 de stockage d'applications. Il doit aussi comporter des moyens de saisie du secret, comme par exemple un clavier de saisie alphanumérique ou un capteur biométrique (non représenté sur les figures 1 à 3). Cette fonctionnalité s'adresse par exemple au propriétaire du dispositif portable de démarrage externe 20, en tant qu'utilisateur souhaitant réaliser le démarrage de l'installation informatique 10 à l'aide de son propre programme de démarrage et des données et codes exécutables associés 22a, 22b, 22c, 22d, 24a, 24b, 24c, 24d.

Comme illustré sur les figures 1, 2 et 3, les moyens 42 de stockage d'applications, d'une part, et les moyens de stockage sécurisé 44, d'autre part, sont présentés comme une architecture possible de mise en oeuvre des fonctionnalités de sécurisation d'une utilisation des données et codes exécutables 22a, 22b, 22c, 22d, 24a, 24b, 24c, 24d, mais d'autres architectures sont également possibles : notamment la fourniture de davantage de média de stockages indépendants et de types différents, adaptés chacun à une ou plusieurs fonction(s) parmi les fonctions de cryptologie précitées, éventuellement partitionnés. Dans le cas de la figure 3, ils peuvent également être confondus avec le support de stockage des données et codes exécutables 22a, 22b, 22c, 22d, 24a, 24b, 24c, 24d, en une ou plusieurs partitions.

En outre, puisque les fonctions précitées mettent en oeuvre des algorithmes à base de clés de cryptographie, des algorithmes de génération de nombres aléatoires, de génération de clés de cryptographie, de conservation de l'intégrité des clés générées et autres peuvent être prévus dans le dispositif de sécurisation 30 et exécutés par le microprocesseur 32 et les moyens de stockage associés.

Enfin, les interfaces 16, 26, 34 et 36 ont été décrites à titre d'exemple comme pouvant être de type USB ou à accès direct à un bus de transmission de données. D'une façon plus générale, ces interfaces peuvent être de type parallèle (bus processeur, PCMCIA, ...), série (USB, PCI-X, ...) ou sans fil (Wireless USB, ...).

La mise en oeuvre, par l'un des systèmes présentés précédemment, d'un mode de réalisation d'un procédé de démarrage de l'installation informatique 10 selon l'invention, va maintenant être détaillée, en référence à la figure 4.

Ce mode de réalisation prévoit la sécurisation, optionnelle, de l'utilisation des données et codes exécutables stockés par le dispositif portable de démarrage externe 20 à l'aide du dispositif de sécurisation 30. Mais il doit bien être noté que la présence du dispositif de sécurisation 30 disposé en coupure fonctionnelle ou matérielle entre l'installation informatique 10 et le dispositif portable de démarrage externe 20, d'une part, et les étapes de sécurisation du procédé de démarrage, d'autre part, sont optionnelles.

Lors d'une première étape 100, l'installation informatique 10 est mise sous tension, ce qui provoque l'exécution du BIOS de la carte mère 12. De façon classique, le BIOS commence par tester, déclarer et configurer les différents éléments matériels et logiciels de l'installation informatique 10, puis recherche un programme de démarrage, et un système d'exploitation associé, avant de le lancer, conformément à une stratégie de démarrage prédéfinie.

Lors d'une étape suivante 102, le BIOS de la carte mère 12 détecte la connexion du dispositif de sécurisation 30 à l'interface 16 de l'installation informatique 10. Lors de cette étape, il sollicite la transmission de données et codes exécutables d'un programme de démarrage auprès du dispositif de sécurisation 30.

Ensuite, lors d'une étape 104, le microprocesseur 32 du dispositif de sécurisation 30, reçoit cette sollicitation et génère une instruction de mise en attente du démarrage de l'installation informatique 10 tant qu'il n'aura pas sécurisé au moins l'utilisation des données 22d et codes exécutables 24d du programme de démarrage stockés par le dispositif portable de démarrage externe 20, voire même l'ensemble des données et codes exécutables 22a, 22b, 22c, 22d, 24a, 24b, 24c, 24d.

Cette étape 104 est suive d'une étape 106 lors de laquelle le microprocesseur de la carte mère 12 suspend le démarrage de l'installation informatique 10.

L'étape 104 est également suivie d'une étape 108 d'authentification, constituant une première étape de sécurisation de l'utilisation des données et codes exécutables 22a, 22b, 22c, 22d, 24a, 24b, 24c, 24d, de manière à s'assurer que l'utilisateur souhaitant démarrer l'installation informatique 10 possède effectivement des droits d'accès aux données et codes exécutables stockés par le dispositif portable de démarrage externe 20. Cette étape requiert la saisie d'un secret (code, mot de passe ou données biométriques) de la part de l'utilisateur, via une interface dédiée du dispositif de démarrage sécurisé 30, ou du dispositif portable de démarrage externe 20 dans le cas de la figure 3.

Suite à l'étape 108, on passe à une étape 110, constituant une seconde étape de sécurisation de l'utilisation des données et codes exécutables 22a, 22b, 22c, 22d, 24a, 24b, 24c, 24d. Lors de cette étape, les données et codes exécutables 2 stockés dans le dispositif portable de démarrage externe 20 sont traités par le microprocesseur 32, à l'aide des fonctions et données de cryptographie stockées dans les moyens de stockage 42 et 44, pour être déchiffrés et/ou validés en terme d'intégrité, avant d'être transmis au processeur de la carte mère 12 de l'installation informatique 10.

La transmission, par le dispositif de sécurisation 30, des données et codes exécutables déchiffrés à l'installation informatique 10 n'est réalisée que si les étapes 108 et 110 s'exécutent avec succès. Une fonction du dispositif de sécurisation 30 est en effet de s'interposer entre l'installation informatique 10 et le dispositif portable de démarrage externe 20 pour réaliser la sécurisation de l'utilisation des données et codes exécutables et pour ne transmettre ces derniers (i.e. les données et codes exécutables) à l'installation informatique 10 qu'à condition que la sécurisation ait été réalisée par le dispositif de sécurisation 30, par vérification et validation des droits d'accès de l'utilisateur, d'une part, et par sécurisation cryptographique des données et codes exécutables eux-mêmes, d'autre part.

Lorsque les droits d'accès sont validés, lorsque l'intégrité des données et codes exécutables est vérifiée et qu'ils sont déchiffrés, on passe à une dernière étape 112 de transmission des données et codes exécutables déchiffrés à l'installation informatique 10, et de poursuite du démarrage de l'installation informatique 10 sur la base des données et codes exécutables transmis. Ce démarrage est réalisé par le microprocesseur de la carte mère 12.

Le fonctionnement du dispositif de sécurisation 30 vient d'être décrit en utilisation courante, pour le démarrage de l'installation informatique 10 par un utilisateur sur la base de données et codes exécutables propres à cet utilisateur et stockés dans le dispositif portable de démarrage externe 20 de cet utilisateur.

Il peut aussi être prévu un fonctionnement en mode « administrateur » du dispositif de sécurisation 30, en alternative au mode « utilisateur » précédemment décrit. Un administrateur est un utilisateur particulier possédant des droits supplémentaires et qui doit donc être identifié à l'aide de données spécifiques.

Dans le mode administrateur, il est par exemple possible de définir la taille des données d'authentification, les mécanismes cryptographiques utilisés, le nombre de partitions et attributs des moyens de stockage, les diverses autorisations d'un utilisateur, le protocole d'authentification utilisé, le droit pour un utilisateur de modifier la configuration des partitions, etc.

Pour la suite de la description, on considère que toutes les données et tous les codes exécutables 22a, 22b, 22c, 22d, 24a, 24b, 24c, 24d des programme de démarrage, système d'exploitation hôte, interface logicielle de pilotage et système d'exploitation invité ont été transmis lors de l'étape 112. Il s'agit d'un simple choix de mode de réalisation. En fait, en variante, les données et codes exécutables du programme de démarrage, ceux du système d'exploitation hôte, ceux de l'interface logicielle de pilotage et ceux du système d'exploitation invité pourraient être transmis en plusieurs étapes selon les besoins de l'installation informatique 10.

Lors de l'étape 112, dès réception des données et codes exécutables, le programme de démarrage est exécuté par l'installation informatique 10.

Ensuite, lors d'une étape 114, le système d'exploitation hôte est activé par ce programme de démarrage. Il détecte automatiquement les éléments matériels et/ou logiciels de l'installation informatique 10, reconnaît, parmi les données 22a, les pilotes informatiques associés et active ces derniers. En outre, le système d'exploitation hôte peut être configuré pour interdire une lecture du disque dur interne de l'installation informatique 10.

Lors d'une étape 116 suivante, le système d'exploitation hôte active l'interface logicielle de pilotage, de manière à établir une correspondance entre les pilotes informatiques activés et correspondant aux éléments matériels et/ou logiciels de l'installation informatique 10, d'une part, et au moins un pilote informatique et générique prédéterminé et reconnu par tous types de systèmes d'exploitation, d'autre part.

Enfin, lors d'une étape 118, le système d'exploitation invité est activé par l'interface logicielle de pilotage. Cette interface logicielle de pilotage remplit une fonction de virtualisation entre le système d'exploitation hôte et le système d'exploitation invité. C'est le système d'exploitation hôte qui permet de reconnaître automatiquement les éléments matériels et/ou logiciels de l'installation informatique 10 au démarrage, mais c'est le système d'exploitation invité qui permet à l'utilisateur de retrouver son environnement habituel de travail.

Il apparaît clairement que le dispositif portable ou procédé de démarrage précédemment décrit permet un démarrage totalement personnalisé d'une installation informatique 10, après une éventuelle sécurisation d'une utilisation des données et codes exécutables réalisée indépendamment des ressources de l'installation informatique. Il suffit que le BIOS de cette installation informatique prévoie prioritairement un démarrage sur la base de données et codes exécutables stockés dans un dispositif externe, ce qui est généralement le cas de tout BIOS correctement paramétré.

Le dispositif de sécurisation 30 se charge ensuite des étapes de vérification et validation des droits d'accès, puis de l'étape de vérification de l'intégrité et de transmission des données et codes exécutables déchiffrés.

Le dispositif portable de démarrage externe 20 se charge quant à lui de transmettre les données et codes exécutables nécessaires au démarrage automatique de l'installation informatique 10 sous un système d'exploitation et un environnement propres à l'utilisateur.

Ainsi, un utilisateur peut emporter avec lui un dispositif portable de démarrage externe qui lui est propre et démarrer toute installation informatique avec l'ensemble de ses données, tout en ayant l'assurance d'une simplicité au démarrage et éventuellement d'une sécurité d'intégrité et de confidentialité dans l'utilisation de ces données.

On notera enfin que l'invention n'est pas limitée aux modes de réalisations décrits précédemment.

En effet, diverses variantes peuvent être apportées dans la structure du système informatique mis en oeuvre, que ce soit au niveau de l'installation informatique, du dispositif de sécurisation ou du dispositif portable de démarrage externe.

Diverses variantes peuvent être apportées également dans le procédé mis en oeuvre. Par exemple, il n'est pas nécessaire que les données et codes exécutables du programme de démarrage, du système d'exploitation hôte et de l'interface logicielle de pilotage soient stockés dans le dispositif portable de démarrage externe pour la mise en oeuvre d'un procédé de démarrage selon l'invention. Seules les données et codes exécutables du système d'exploitation invité comportent les données propres de l'utilisateur et doivent être stockés dans son dispositif portable de démarrage externe. Dans ce cas, le programme de démarrage, le système d'exploitation hôte et l'interface logicielle de pilotage peuvent être présents dans l'installation informatique 10 elle-même : lors de son exécution, l'interface logicielle de pilotage requiert la transmission des données et codes exécutables du système d'exploitation invité depuis le dispositif portable de démarrage externe. En revanche, en pratique, il est préférable que le système d'exploitation hôte et l'interface logicielle de pilotage soient stockés sur un même support.

## Revendications

1. Dispositif portable (20) de démarrage externe d'une installation informatique (10) comportant :
- une interface (26) de connexion à l'installation informatique,
- un support de données comportant des données et codes exécutables (22a, 24a) d'un système d'exploitation hôte activable par un programme de démarrage de l'installation informatique et configuré pour une détection automatique d'éléments matériels et/ou logiciels (12, 14, 16) de l'installation informatique et pour une activation de pilotes informatiques correspondants,
**caractérisé en ce que** le support de données comporte en outre :
- des données et codes exécutables (22b, 24b) d'une interface logicielle de pilotage configurée pour présenter les pilotes informatiques activés par le système d'exploitation hôte sous la forme d'au moins un pilote informatique générique prédéterminé, et
- des données et codes exécutables (22c, 24c) d'un système d'exploitation invité activable par l'interface logicielle de pilotage et configuré pour une gestion des éléments matériels et/ou logiciels de l'installation informatique à l'aide du pilote informatique générique prédéterminé.

2. Dispositif portable (20) de démarrage externe d'une installation informatique (10) selon la revendication 1, dans lequel le support de données comporte des données et codes exécutables (22d, 24d) du programme de démarrage de l'installation informatique.

3. Dispositif portable (20) de démarrage externe d'une installation informatique (10) selon la revendication 1 ou 2, dans lequel l'interface de connexion (26) est un port USB.

4. Dispositif portable (20) de démarrage externe d'une installation informatique (10) selon l'une quelconque des revendications 1 à 3, comportant des moyens (32, 42, 44) de sécurisation d'une utilisation des données et codes exécutables (22a, 22b, 22c, 24a, 24b, 24c) et des moyens (32, 40) de transmission des données et codes exécutables, depuis le support de données vers l'installation informatique (10) via l'interface de connexion (26), après exécution des moyens de sécurisation (32, 42, 44), pour le démarrage de l'installation informatique à l'aide des données et codes exécutables transmis.

5. Dispositif portable (20) de démarrage externe d'une installation informatique (10) selon la revendication 4, dans lequel les moyens de sécurisation (32, 42, 44) comportent des moyens de vérification et de validation de droits d'accès, pour l'exécution d'un procédé d'authentification d'un utilisateur du dispositif.

6. Dispositif portable (20) de démarrage externe d'une installation informatique (10) selon la revendication 4 ou 5, dans lequel les moyens de sécurisation (32, 42, 44) comportent des moyens cryptographiques de sécurisation des données et codes exécutables (22a, 22b, 22c, 24a, 24b, 24c) stockés dans le support de données.

7. Dispositif portable (20) de démarrage externe d'une installation informatique (10) selon la revendication 6, dans lequel les moyens cryptographiques de sécurisation comportent des moyens d'exécution d'un procédé de vérification de l'intégrité des données et codes exécutables (22a, 22b, 22c, 24a, 24b, 24c) stockés dans le support de données.

8. Dispositif portable (20) de démarrage externe d'une installation informatique (10) selon la revendication 6 ou 7, dans lequel les moyens cryptographiques de sécurisation comportent des moyens d'exécution d'un procédé de déchiffrement des données et codes exécutables (22a, 22b, 22c, 24a, 24b, 24c) stockés dans le support de données.

9. Procédé de démarrage d'une installation informatique (10) à l'aide d'un dispositif portable (20) de démarrage externe, comportant les étapes suivantes :
- connexion (102) du dispositif portable de démarrage externe à l'installation informatique,
- exécution (112) d'un programme de démarrage de l'installation informatique,
- activation (114) d'un premier système d'exploitation par le programme de démarrage de l'installation informatique pour une détection automatique d'éléments matériels et/ou logiciels (12, 14, 16) de l'installation informatique et pour une activation de pilotes informatiques correspondants,
**caractérisé en ce qu'**il comporte en outre les étapes suivantes :
- activation (116) d'une interface logicielle de pilotage configurée pour présenter les pilotes informatiques activés par le premier système d'exploitation sous la forme d'au moins un pilote informatique générique prédéterminé, et
- activation (118), par l'interface logicielle de pilotage, d'un second système d'exploitation stocké sous forme de données et codes exécutables (22c, 24c) par le dispositif portable de démarrage externe (20) pour une gestion des éléments matériels et/ou logiciels (12, 14, 16) de l'installation informatique à l'aide du pilote informatique générique prédéterminé.

10. Procédé de démarrage d'une installation informatique (10) selon la revendication 9, comportant une étape (108, 110) de sécurisation d'une utilisation des données et codes exécutables (22a, 22b, 22c, 24a, 24b, 24c) stockés dans le support de données du dispositif portable de démarrage externe (20) et, après exécution de l'étape de sécurisation, une étape de transmission (112), par le dispositif portable de démarrage externe, des données et codes exécutables stockés dans support de données vers l'installation informatique, pour l'activation du second système d'exploitation.

## Patentansprüche

1. Tragbare Vorrichtung (20) zum externen Starten einer IT-Anlage (10), umfassend:
- eine Schnittstelle (26) zum Verbinden mit der IT-Anlage,
- einen Datenträger, Daten und ausführbare Codes (22a, 24a) eines Host-Betriebssystems umfassend, das durch ein Programm zum Starten der IT-Anlage aktivierbar ist, und für eine automatische Detektion von Hard- und/oder Software-Elementen (12, 14, 16) der IT-Anlage konfiguriert ist, und für eine Aktivierung von entsprechenden IT-Treibern,
**dadurch gekennzeichnet, dass** der Datenträger weiter umfasst:
- Daten und ausführbare Codes (22b, 24b) einer Treiber-Softwareschnittstelle, konfiguriert, um die von dem Host-Betriebssystem aktivierten IT-Treiber in Form von zumindest einem vorbestimmten Sammel-IT-Treiber zu präsentieren, und
- Daten und ausführbare Codes (22c, 24c) eines Gast-Betriebssystems, das durch die Treiber-Softwareschnittstelle aktivierbar ist, und für eine Verwaltung der Hard- und/oder Software-Elemente der IT-Anlage mithilfe des vorbestimmten Sammel-IT-Treibers konfiguriert ist.

2. Tragbare Vorrichtung (20) zum externen Starten einer IT-Anlage (10) nach Anspruch 1, wobei der Datenträger Daten und ausführbare Codes (22d, 24d) des Startprogramms der IT-Anlage umfasst.

3. Tragbare Vorrichtung (20) zum externen Starten einer IT-Anlage (10) nach Anspruch 1 oder 2, wobei die Schnittstelle zum Verbinden (26) ein USB-Port ist.

4. Tragbare Vorrichtung (20) zum externen Starten einer IT-Anlage (10) nach einem der Ansprüche 1 bis 3, Mittel (32, 42, 44) zum Sichern einer Nutzung der Daten und ausführbaren Codes (22a, 22b, 22c, 24a, 24b, 24c) und Mittel (32, 40) zum Übertragen der Daten und ausführbaren Codes von dem Datenträger zur IT-Anlage (10) über die Schnittstelle zum Verbinden (26) nach Ausführung der Mittel (32, 42, 44) zum Sichern für das Starten der IT-Anlage mithilfe der übertragenen Daten und ausführbaren Codes umfassend.

5. Tragbare Vorrichtung (20) zum externen Starten einer IT-Anlage (10) nach Anspruch 4, wobei die Mittel zum Sichern (32, 42, 44) Mittel zum Überprüfen und zum Bestätigen der Zugriffsrechte zur Ausführung eines Authentifizierungsverfahrens eines Nutzers der Vorrichtung umfassen.

6. Tragbare Vorrichtung (20) zum externen Starten einer IT-Anlage (10) nach Anspruch 4 oder 5, wobei die Mittel zum Sichern (32, 42, 44) kryptografische Mittel zum Sichern der Daten und ausführbaren Codes (22a, 22b, 22c, 24a, 24b, 24c) umfassen, die in dem Datenträger abgelegt sind.

7. Tragbare Vorrichtung (20) zum externen Starten einer IT-Anlage (10) nach Anspruch 6, wobei die kryptografischen Mittel zum Sichern Mittel zum Ausführen eines Verfahrens zum Überprüfen der Integrität der Daten und ausführbaren Codes (22a, 22b, 22c, 24a, 24b, 24c) umfassen, die in dem Datenträger abgelegt sind.

8. Tragbare Vorrichtung (20) zum externen Starten einer IT-Anlage (10) nach Anspruch 6 oder 7, wobei die kryptografischen Mittel zum Sichern Mittel zum Ausführen eines Verfahrens zum Entschlüsseln der Daten und ausführbaren Codes (22a, 22b, 22c, 24a, 24b, 24c) umfassen, die in dem Datenträger abgelegt sind.

9. Verfahren zum Starten einer IT-Anlage (10) mithilfe einer tragbaren Vorrichtung (20) zum externen Starten, die folgenden Schritte umfassend:
- Verbinden (102) der tragbaren Vorrichtung zum externen Starten mit der IT-Anlage,
- Ausführen (112) eines Programms zum Starten der IT-Anlage,
- Aktivieren (114) eines ersten Betriebssystems durch das Programm zum Starten der IT-Anlage für eine automatische Detektion von Hard- und/oder Software-Elementen (12, 14, 16) der IT-Anlage und für eine Aktivierung von entsprechenden IT-Treibern,
**dadurch gekennzeichnet, dass** es weiter die folgenden Schritte umfasst:
- Aktivieren (116) einer Treiber-Softwareschnittstelle, konfiguriert, um die von dem Host-Betriebssystem aktivierten IT-Treiber in Form von zumindest einem vorbestimmten Sammel-IT-Treiber zu präsentieren, und
- Aktivieren (118) durch die Treiber-Softwareschnittstelle eines zweiten Betriebssystems, das in Form von Daten und ausführbaren Codes (22c, 24c) abgelegt ist, durch die tragbare Vorrichtung zum externen Starten (20) für eine Verwaltung der Hard- und/oder Software-Elemente (12, 14, 16) der IT-Anlage mithilfe des vorbestimmten Sammel-IT-Treibers.

10. Verfahren zum Starten einer IT-Anlage (10) nach Anspruch 9, einen Schritt (108, 110) zum Sichern einer Nutzung der Daten und ausführbaren Codes (22a, 22b, 22c, 24a, 24b, 24c) umfassend, die in dem Datenträger der tragbaren Vorrichtung zum externen Starten (20) abgelegt sind, und, nach dem Ausführen des Schritts zum Sichern, einen Schritt zum Übertragen (112) durch die tragbare Vorrichtung zum externen Starten der Daten und ausführbaren Codes umfassend, die in dem Datenträger abgelegt sind, zu der IT-Anlage zum Aktivieren des zweiten Betriebssystems.

## Claims

1. Portable device (20) for externally starting up a computer installation (10), comprising:
- a connection interface (26) to the computer installation,
- a data medium comprising data and executable codes (22a, 24a) of a host operating system that can be activated by a start-up program of the computer installation and configured to automatically detect hardware and/or software elements (12, 14, 16) of the computer installation and to activate corresponding computer drivers,
**characterized in that** the data medium further comprises:
- data and executable codes (22b, 24b) of a driving software interface that is configured to present the computer drivers that are activated by the host operating system in the form of at least one predetermined generic computer driver, and
- data and executable codes (22c, 24c) of a guest operating system that can be activated by the driving software interface and configured to manage the hardware and/or software elements of the computer installation using the predetermined generic computer driver.

2. Portable device (20) for externally starting up a computer installation (10) according to claim 1, wherein the data medium contains data and executable codes (22d, 24d) of the start-up program of the computer installation.

3. Portable device (20) for externally starting up a computer installation (10) according to claim 1 or 2, wherein the connection interface (26) is a USB port.

4. Portable device (20) for externally starting up a computer installation (10) according to any one of claims 1 to 3, comprising means (32, 42, 44) for securing use of data and executable codes (22a, 22b, 22c, 24a, 24b, 24c) and means for transmitting data and executable codes, from the data medium to the computer installation (10) via the connection interface (26), after performing the securing means (32, 42, 44) for starting up the computer installation using the transmitted data and executable codes.

5. Portable device (20) for externally starting up a computer installation (10) according to claim 4, wherein the securing means (32, 42, 44) comprises means for verifying and validating access rights for executing an authentication method of a user of the device.

6. Portable device (20) for externally starting up a computer installation (10) according to claim 4 or 5, wherein the securing means (32, 42, 44) comprises cryptographic means for securing data and executable codes (22a, 22b, 22c, 24a, 24b, 24c) stored on the data medium.

7. Portable device (20) for externally starting up a computer installation (10) according to claim 6, wherein the securing cryptographic means comprises means for executing a method for verifying the integrity of data and executable codes (22a, 22b, 22c, 24a, 24b, 24c) stored on the data medium.

8. Portable device (20) for externally starting up a computer installation (10) according to claim 6 or 7, wherein the securing cryptographic means comprises means for executing a method for decrypting data and executable codes (22a, 22b, 22c, 24a, 24b, 24c) stored on the data medium.

9. Method for starting up a computer installation (10) using a portable device (20) for external start-up, comprising the following steps:
- connecting (102) the portable device for external start-up to the computer installation,
- executing (112) a start-up program of the computer installation,
- activating (114) a first operating system by the start-up program of the computer installation to automatically detect hardware and/or software elements (12, 14, 16) of the computer installation and to activate corresponding computer drivers,
**characterized in that** it further comprises the following steps:
- activating (116) a driving software interface configured to present the computer drivers that are activated by the first operating system in the form of at least one predetermined generic computer driver, and
- activating (118), by the driving software interface, a second operating system, stored in the form of data and executable codes (22c, 24c) by the portable device for external start-up, for managing hardware and/or software elements (12, 14, 16) of the computer installation using the predetermined generic computer driver.

10. Method for starting up a computer installation (10) according to claim 9, comprising a step (108, 110) for securing use of data and executable codes (22a, 22b, 22c, 24a, 24b, 24c) stored on the data medium of the portable device (20) for external start-up and, after the securing step has been executed, a transmission step (112), by the portable device for external start-up, of data and executable codes stored on the data medium to the computer installation, to activate the second operating system.
